# EUROPÄISCHE PATENTSCHRIFT

(11) **EP 1 214 527 B1**
(45) Veröffentlichungstag und Bekanntmachung des Hinweises auf die Patenterteilung: **14.04.2004**
(21) Anmeldenummer: 00954663.1
(22) Anmeldetag: 28.08.2000
(51) Int. Cl.: F16C 17/10, F16C 33/04, F16C 11/04, F16C 25/02

(54) **GLEITLAGERUNG**
PLAIN BEARING
PALIER DE GLISSEMENT

(30) Priorität: 22.09.1999 DE 19945371
(43) Veröffentlichungstag der Anmeldung: 19.06.2002
(73) Patentinhaber: KS Gleitlager GmbH, 68789 St. Leon-Rot (DE)
(72) Erfinder: STORCH, Thomas, D-68782 Brühl (DE); BICKLE, Wolfgang, D-68799 Reilingen (DE)
(74) Vertreter: Friz, Oliver
(86) Internationale Anmeldenummer: PCT/EP2000/008368
(87) Internationale Veröffentlichungsnummer: WO 2001/021968

(56) Entgegenhaltungen:
- WO-A-98/28105
- DE-A- 3 308 113
- DE-A- 19 719 129
- US-A- 4 582 435
- US-A- 4 796 457
- US-A- 5 385 422
- PATENT ABSTRACTS OF JAPAN vol. 1996, no. 04, 30. April 1996 (1996-04-30) & JP 07 317771 A (NDC CO LTD), 8. Dezember 1995 (1995-12-08)

## Beschreibung

Die Erfindung betrifft eine Gleitlagerung umfassend ein eine durchgehende Lageröffnung aufweisendes Scharniergehäuseteil und eine in die Lageröffnung eingepresste Bundlagerbuchse, in die ein Lagerbolzen eingesteckt und darin schwenkbar gelagert ist, wobei die Bundlagerschale einen zylindrischen Buchsenteil und einen nach radial außen weisenden Bund aufweist und wobei der zylindrische Buchsenteil der in die Lageröffnung eingesteckten Bundlagerbuchse durch axiales Stauchen der Stirnfläche nach radial außen und nach radial innen deformiert ist und spielfrei gegen die Innenwandung der Lageröffnung und gegen die Umfangsfläche des Lagerbolzens anliegt und wobei an der dem Bund der Bundlagerbuchse gegenüberliegenden Seite der Gleitlagerung ein ringscheibenförmiges Axiallagerelement vorgesehen ist, welches radial außen gegen den die Lageröffnung umgebenden Oberflächenbereich des Scharniergehäuseteils anliegt. Der vorstehend gewählte Begriff des Scharniergehäuseteils ist weitgehend zu verstehen. Es kann sich hierbei um einen Scharnierarm handeln oder aber um ein orts- oder maschinenfestes Wandungsteil, in dem eine Lageröffnung ausgebildet ist. Eine derartige Gleitlagerung ist aus DE-A-33 08 113 bekannt.

Bei der Herstellung und Montage von Gleitlagerungen, insbesondere bei der Fließbandfertigung im Kraftfahrzeugbereich, beispielsweise bei der Montage von schwenkbaren Komponenten, wie Türen, Heckklappen oder Kühlerhauben, ist es von Vorteil, wenn die Anzahl der Montageschritte so weit wie möglich reduziert werden kann. Vorzugsweise sollen vormontierte Komponenten Verwendung finden, um die Montage am Fließband effizienter zu gestalten.

Der vorliegenden Erfindung liegt daher die Aufgabe zugrunde, eine Gleitlagerung der eingangs genannten Art zu schaffen, die diesem Aspekt gerecht wird.

Diese Aufgabe wird durch eine Gleitlagerung der genannten Art mit den Merkmalen des Anspruchs 1 gelöst.

Zwar war es bei einer nicht gattungsgemäßen Gleitlagerung nach DE 196 46 777 A1 mit einer Lageröffnung in einem Gehäuseteil und einer darin eingesteckten bundlosen gerollten zylindrischen Gleitlagerbuchse bekannt, durch axiales Stauchen der gegenüberliegenden Stirnflächen der zylindrischen Buchse eine nach radial außen und radial innen gerichtete Deformation der Buchse und damit eine spielfreie Anordnung der Buchse in der Lageröffnung zu erreichen; hierdurch konnte aber keine vormontierte Einheit aus Gehäuseteil, Buchse und Lagerbolzen erhalten werden.

Nach der Erfindung wird eine Gleitlagerung aus Scharniergehäuseteil, Buchse und Bolzen geschaffen, die als vormontierbare Einheit hergestellt, transportiert, gelagert und schließlich der Montage am Fließband zugeführt werden kann. Die Bundlagerbuchse ist im Presssitz in die Lageröffnung des Scharniergehäuseteils eingepresst, und der Lagerbolzen ist unter Zusammenwirken mit dem Axiallagerelement unverlierbar in der Öffnung der Bundlagerbuchse gehalten. Vorzugsweise umfasst der Bolzen einen Bund- oder Flanschabschnitt, der seinerseits gegen den Bund der Bundlagerbuchse anliegt und diese somit ebenfalls sichert.

Aus der DE 296 22 973 U ist eine nicht gattungsgemäße Gleitlagerung bekannt, bei der ein tiefgezogenes topfförmiges Gehäuseteil eine bundlose gerollte Buchse aufnimmt. Nach Einstecken eines Lagerbolzens in die Öffnung wird die frei zugängliche Stirnseite der Lagerbuchse gestaucht und dabei eine Deformierung der Buchse nach radial außen und nach radial innen erreicht. Der Bolzen ist durch eine Abdeckscheibe gegen Herausfallen gesichert. Die so erhaltene Einheit muss ihrerseits in einer Öffnung eines Scharniergehäuseteils angeordnet werden. Es sind daher weitere Montageschritte erforderlich. Zudem ist der Teileaufwand größer als bei der erfindungsgemäßen Gleitlagerung und daher teurer.

In weiterer Ausbildung des Erfindungsgedankens ist der durch das Axiallagerelement hindurchgreifende Abschnitt des Lagerbolzens nach radial außen deformiert und bildet eine Einbördelung des radial inneren Randbereichs des Axiallagerelements. Hierdurch ist der Bolzen unverlierbar in der Lageröffnung gehalten. Es versteht sich, dass der Lagerbolzen auch auf andere Weise gegen das Axiallagerelement in axialer Richtung unverlierbar lagegesichert werden kann. So könnte das Axiallagerelement beispielsweise zweiteilig ausgebildet sein und in Umfangsringnuten oder sonstige Hinterschneidungen des Lagerbolzenschafts eingreifen. Das Axiallagerelement könnte nach radial innen vorstehende Federzungen od.dgl. aufweisen, die in Hinterschneidungen einklipsbar sind, oder es könnten weitere Montageelemente zum Einsatz kommen. Demgegenüber erweist es sich eine Deformierung der Stirnseite des Lagerbolzens als vorteilhaft, da sie auf einfache Weise herstellbar ist.

Der Lagerbolzen könnte eine stirnseitige Ausnehmung aufweisen, um durch Eingriff weiterer Montageteile mit einem weiteren Scharniergehäuseteil zur Ausbildung eines Gelenks verbunden werden zu können. Demgegenüber erweist sich als vorteilhaft, wenn der Lagerbolzen einen Befestigungsabschnitt an einem Ende aufweist, mit dem er mit einem weiteren Scharniergehäuseteil zur Ausbildung eines Gelenks verbindbar ist. Vorzugsweise ist der Lagerbolzen mit dem weiteren Scharniergehäuseteil drehfest verbindbar.

In ganz besonders vorteilhafter Weiterbildung der Erfindung ist der zylindrische Buchsenteil der Bundlagerbuchse durch axiales Stauchen seiner Stirnfläche nach radial außen und nach radial innen gegen die Innenwandung der Lageröffnung und gegen die Umfangsfläche des Lagerbolzens derart deformiert, dass ein Losbrechdrehmoment der Gleitlagerung zwischen 0,5 und 4,0 Nm, vorzugsweise zwischen 0,5 und 2,5 Nm und in ganz besonders bevorzugter Weise zwischen 0,5 und 2 Nm, resultiert. Das Losbrechdrehmoment ist vorzugsweise stets um mehr als 1 Nm größer als das nach dem Losbrechen sich einstellende Drehmoment der Gleitlagerung.

Dem vorstehenden Gedanken kommt auch losgelöst von der vorstehend beschriebenen Ausbildung der Gleitlagerung eigenständige erfinderische Bedeutung zu. Es wurde hiermit festgestellt, dass durch mehr oder weniger starkes Deformieren, welches durch Einleitung der Kraft auf die Stirnfläche des zylindrischen Buchsenteils der Bundlagerbuchse gesteuert werden kann, das zum Verschwenken der Gleitlagerung erforderliche Drehmoment vorgegeben werden kann, wobei man, wie vorstehend erwähnt, zwischen dem Losbrechdrehmoment der Gleitlagerung und einem sich danach einstellenden Drehmoment unterscheidet, etwa vergleichbar mit der Haftreibung und der danach sich einstellenden Gleitreibung zwischen Reibpartnern.

Der Erfindung kommt in besonderem Maße bei der Herstellung von Gleitlagerungen für Kraftfahrzeuggelenke, insbesondere bei der Herstellung und Montage von Kraftfahrzeugtürscharnieren, besondere Bedeutung zu. Es soll einerseits ein Drehmoment bei Kraftfahrzeugtüren erreicht werden, das vom Benutzer als nicht zu schwergängig und daher komfortabel handhabbar empfunden wird. Auf der anderen Seite sollte sichergestellt werden, dass im Zuge der Montage des Kraftfahrzeugs, insbesondere unter Berücksichtigung des Durchlaufs der Karosserien durch eine Lackieranlage, die Kraftfahrzeugtüren in einer teilweise geöffneten Stellung verharren. Da die Karosserien auf Fertigungsstraßen oftmals über schiefe Ebenen nach oben und unten geleitet werden, besteht die Gefahr, dass sich die geöffneten Kraftfahrzeugtüren von alleine schließen oder bei Abwärtsfahrten zu weit öffnen.

Mit der vorliegenden Erfindung konnte nun erstmalig diesem Problem begegnet werden, indem eine Gleitlagerung geschaffen wurde, bei der durch mehr oder weniger starkes axiales Stauchen der Stirnfläche der Gleitlagerbuchse das Losbrechdrehmoment wie auch das sich danach einstellende Drehmoment des hieraus resultierenden Gelenks eingestellt werden kann.

Es hat sich als zweckmäßig erwiesen, dass bei einem Lagerbolzendurchmesser zwischen 5 und 20 mm der Durchmesser der Lageröffnungen in dem Scharniergehäuseteil zwischen 2 und 2,5 mm größer ist als der Lagerbolzendurchmesser. Es ergibt sich somit ein radialer Spalt zwischen 1 und 1,25 mm, in den der zylindrische Teil der Bundlagerbuchse eingreift. Durch axiales Stauchen der Stirnfläche des zylindrischen Buchsenteils kann nun das Drehmoment eingestellt werden. Es wird daher Schutz für ein Verfahren mit den Merkmalen des Anspruchs 15 beansprucht. An dieser Stelle wird darauf hingewiesen, dass es unbehelflich wäre, als Verfahrensmerkmal eine Deformierungskraft innerhalb eines bestimmten Kraftbereichs zu beanspruchen, mit der die Stauchung der Stirnfläche des zylindrischen Teils der Bundlagerbuchse ausgeführt wird. Die Kraft zur Herstellung einer erwünschten Schwergängigkeit in Form eines erwünschten Drehmoments hängt nämlich von der Größe der Stirnfläche, auf die unter Verwendung einer Stauchhülse eingewirkt wird, ab. Kleine Veränderungen der Größe des Spalts, die vorteilhafterweise im Wesentlichen der Dicke der Stauchhülse entspricht, führen zu abweichenden Ergebnissen. Es lässt sich jedoch der zur Herstellung eines bestimmten Drehmomentbereichs erforderliche Kraftbereich durch einfache Versuche ermitteln, indem bei vorgegebener Geometrie der Gleitlagerung einige Deformierungsversuche mit unterschiedlicher Krafteinwirkung durchgeführt werden und die sich hierbei ergebenden Drehmomente gemessen werden. Durch einfache graphische Auswertung lässt sich dann der bevorzugte Bereich ermitteln.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Gleitlagerung sowie der Darstellung einiger Messungen in Form von Diagrammen. In der Zeichnung zeigen:
- Figuren 1a bis 1d:: teilweise Ansichten verschiedener Herstellungsschritte der erfindungsgemäßen Gleitlagerung;
- Figur 2:: eine Darstellung des Losbrechdrehmoments bzw. des sich danach einstellenden Drehmoments in Abhängigkeit von der Deformierungskraft bei der Herstellung der Gleitlagerung; und
- Figur 3: eine der Fig. 2 entsprechende Darstellung bei anderer Geometrie der Gleitlagerung.

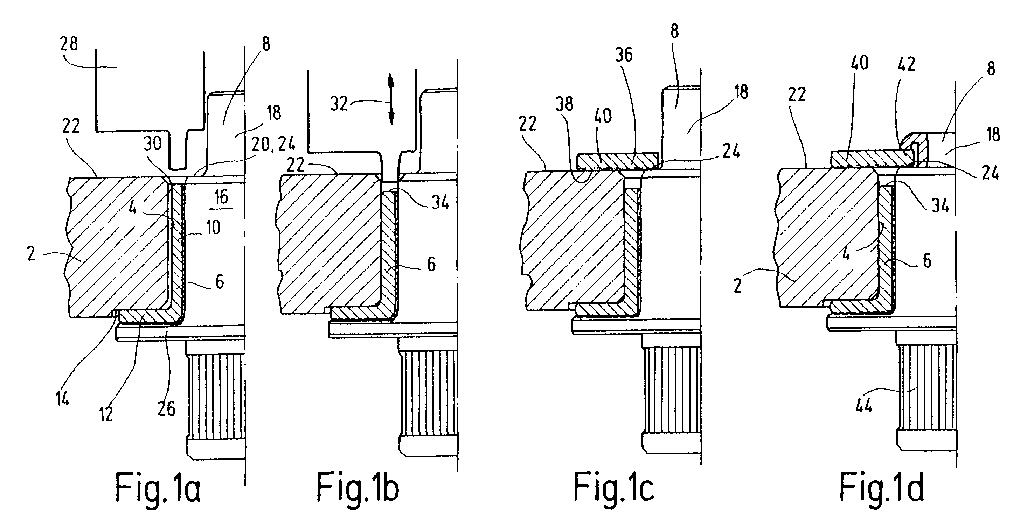

Die Fig. 1a - 1d zeigen verschiedene Herstellungsschritte einer erfindungsgemäßen Gleitlagerung. Diese umfasst ein Scharniergehäuseteil 2 mit einer als zylindrische Bohrung hergestellten Lageröffnung 4 und einer in die Lageröffnung 4 eingepressten Bundlagerbuchse 6. In die Bundlagerbuchse 6 ist ein Lagerbolzen 8 eingesetzt. Die Bundlagerbuchse 6 umfasst einen zylindrischen Teil 10 und den Bund 12, der gegen einen die Lageröffnung 4 unmittelbar umgebenden Oberflächenbereich 14 des Scharniergehäuseteils 2 anliegt. Der Lagerbolzen 8 umfasst einen ersten durchmessergrößeren zylindrischen Abschnitt 16 und einen zweiten durchmesserkleineren zylindrischen Abschnitt 18. Im Übergang zwischen den Abschnitten 16 und 18 ist eine axiale Stufe 20 ausgebildet mit einer parallel zur Bundebene der Bundlagerbuchse 6 bzw. parallel zu einer Oberfläche 22 des Scharniergehäuseteils 2 verlaufenden Anlagefläche 24. Der Lagerbolzen 8 umfasst ferner einen radial vorstehenden flanschförmigen Abschnitt 26, mit dem er gegen den Bund 12 der Bundlagerbuchse 6 anliegt und diese im fertig montierten Zustand gegen Herausfallen sichert.

Der Übergang zwischen dem durchmesserweiteren Abschnitt 16 und dem durchmesserkleineren Abschnitt 18 des Lagerbolzens 8 ist so gewählt, dass die Anlagefläche 24 in der Ebene der Fläche 22 des Scharniergehäuseteils 2 verläuft. Ausgehend von dem in Fig. 1a dargestellten Zustand wird ein Druckstück 28 mit einer dem Spalt 30 zwischen der Wandung der Lageröffnung 4 und der Außenfläche des durchmesserweiteren Abschnitts 16 des Lagerbolzens 8 entsprechenden Geometrie angenähert und, wie aus Fig. 1b ersichtlich, in axialer Richtung 32 in den Spalt hineinbewegt. Dabei staucht das Druckstück 28 die axiale Stirnfläche 34 der Bundlagerbuchse 6 und deformiert diese nach radial außen und nach radial innen. Es wird so eine spielfreie Anlage der Bundlagerbuchse gegen die Wandung der Lageröffnung 4 und gegen die Umfangsfläche des durchmesserweiteren Abschnitts 16 des Lagerbolzens 8 erreicht. Nach dem Stauchvorgang ist die Stirnfläche 34 gegen die Oberfläche 22 des Scharniergehäuseteils 2 in axialer Richtung zurückgesetzt. Es kann nun, wie in Fig. 1c dargestellt, ein ringscheibenförmiges Axiallagerelement 36 in Form eines Stahl/Kunststoff-Verbundlagerwerkstoffs über den durchmesserkleineren Abschnitt des Bolzens gestülpt und in Anlage einerseits an die Oberfläche 22 des Scharniergehäuseteils 2 und andererseits in Anlage an die Anlagefläche 24 des Lagerbolzens 8 gebracht werden. Das Axiallagerelement umfasst eine Gleitfläche 38, die von einer Kunststoffgleitschicht auf PTFE-Basis gebildet ist, welche in eine poröse Oberfläche eingebracht ist, die vorzugsweise von einer porösen auf einen Stahlrücken 40 aufgesinterten Bronzeschicht gebildet ist. In entsprechender Weise ist die Bundlagerbuchse 6 hergestellt.

In einem weiteren, aus Fig. 1d ersichtlichen Montageschritt wird der durchmesserkleinere Abschnitt 18 des Lagerbolzens 8 nach radial außen deformiert. Hierdurch wird der radial innere Randabschnitt 42 des Axiallagerelements 40 eingebördelt. Der Lagerbolzen 8 ist nun unverlierbar in der Lageröffnung gehalten.

Der Lagerbolzen 8 umfasst an seiner gegenüberliegenden Seite einen Befestigungsabschnitt 44, über den er drehfest auf einem weiteren nicht dargestellten Scharniergehäuseteil verbindbar ist.

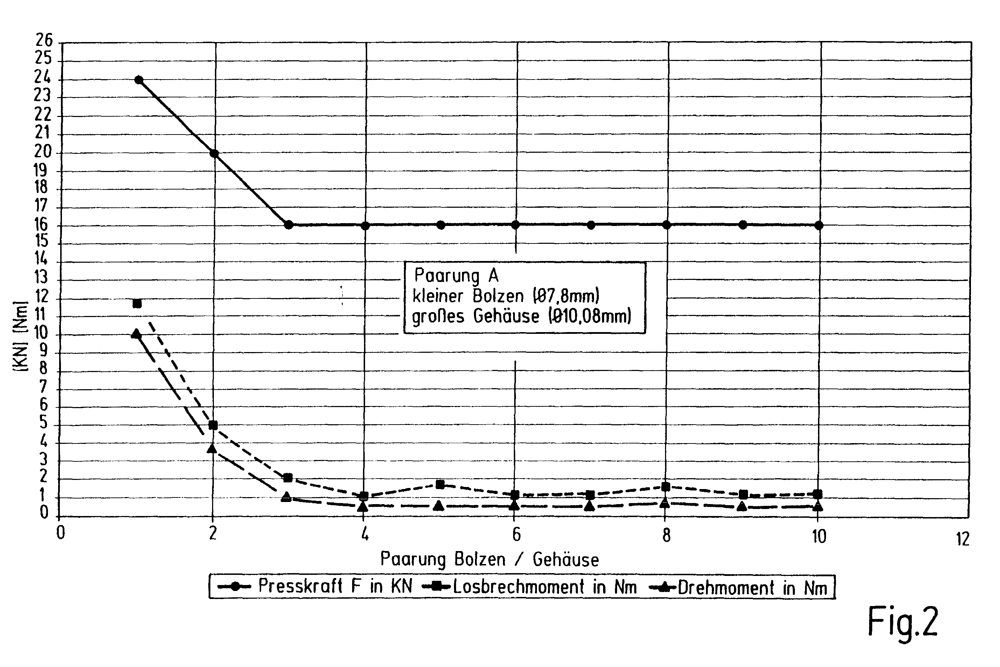

Fig. 2 zeigt das Verhalten des Losbrechdrehmoments bzw. des Drehmoments in Abhängigkeit der Kalibrierkraft einer Gleitlagerung, die gebildet ist aus einer Paarung eines Lagerbolzens mit einem Außendurchmesser innerhalb der Bundlagerbuchse von 7,8 mm und einer Lageröffnung in dem Scharniergehäuseteil mit einem Durchmesser von 10,08 mm. Es wurden 10 verschiedene Gleitlagerungen hergestellt, wobei die axiale Stirnfläche innerhalb des Spalts zwischen Lageröffnung und Lagerbolzen mit einer Kraft von 24 kN (1), 20 kN (2) und 16 kN (3 - 10) gestaucht wurde. Es ergibt sich ein Losbrechdrehmoment bzw. ein sich danach einstellendes Drehmoment, welches aus dem Diagramm ersichtlich ist. Das Diagramm zeigt, dass bei einer Deformierungskraft von etwa 16 kN ein Losbrechdrehmoment bzw. ein Drehmoment im Bereich von 0,5 - 2 Nm erreicht wird.

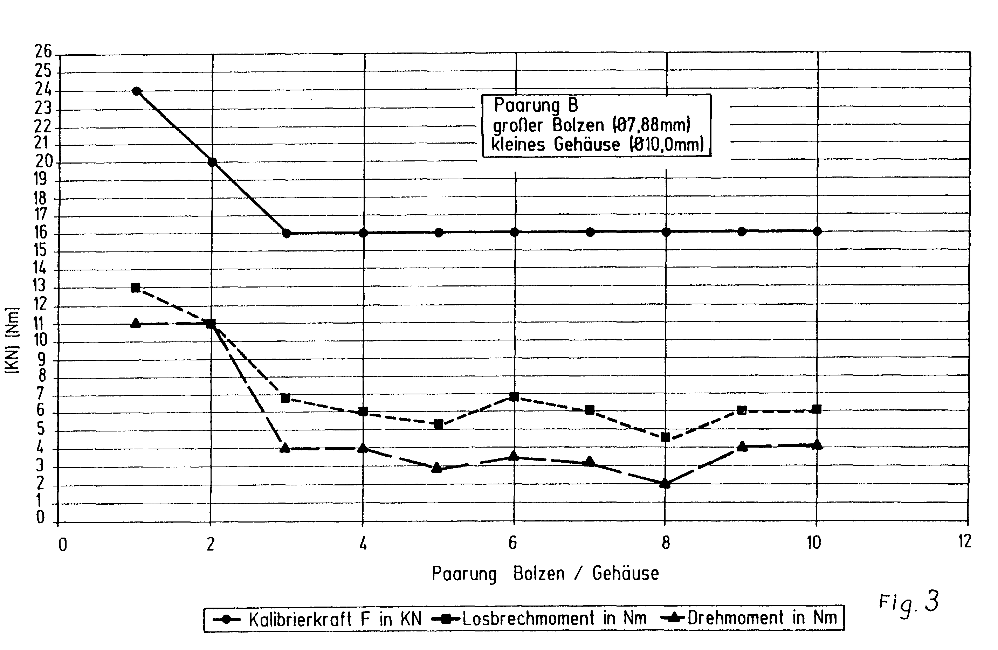

Eine entsprechende Darstellung zeigt Fig. 3, wobei ein gegenüber der Messung nach Fig. 2 geringfügig größerer Bolzen mit einem Durchmesser von 7,88 mm und eine kleinere Lageröffnung von 10,0 mm als Bolzen/Gehäuse-Paarung verwendet wurden. Unter Anwendung derselben Deformierungskraft ergeben sich Losbrechdrehmomente bzw. Drehmomente, die höher liegen als diejenigen nach Fig. 2.

## Patentansprüche

1. Gleitlagerung umfassend ein eine durchgehende Lageröffnung (4) aufweisendes Scharniergehäuseteil (2) und eine in die Lageröffnung (4) eingepresste Bundlagerbuchse (6), in die ein Lagerbolzen (8) eingesteckt und darin schwenkbar gelagert ist, wobei die Bundlagerschale (6) einen zylindrischen Buchsenteil (10) und einen nach radial außen weisenden Bund (12) aufweist und wobei der zylindrische Buchsenteil (10) der in die Lageröffnung (4) eingesteckten Bundlagerbuchse (6) durch axiales Stauchen der Stirnfläche (34) nach radial außen und nach radial innen deformiert ist und spielfrei gegen die Innenwandung der Lageröffnung (4) und gegen die Umfangsfläche des Lagerbolzens (8) anliegt und wobei an der dem Bund (12) der Bundlagerbuchse (6) gegenüberliegenden Seite der Gleitlagerung ein ringscheibenförmiges Axiallagerelement (40) vorgesehen ist, welches radial außen gegen den die Lageröffnung (4) umgebenden Oberflächenbereich (22) des Scharniergehäuseteils (2) anliegt, **dadurch gekennzeichnet, dass** die Stirnfläche (34) des zylindrischen Buchsenteils (10) der Bundlagerbuchse (6) hinter den die Lageröffnung (4) umgebenden Oberflächenbereich (22) des Scharniergehäuseteils (2) zurückgesetzt ist oder höchstens bündig zu diesem verläuft und dass das ringscheibenförmige Axiallagerelement (40) radial innen gegen eine axiale Stufe (20) des Lagerbolzens (8) anliegt und dass der Lagerbolzen (8) gegen das Axiallagerelement (40) in axialer Richtung unverlierbar lagegesichert ist.

2. Gleitlagerung nach Anspruch 1, **dadurch gekennzeichnet, dass** der Lagerbolzen (8) einen radial erstreckten Bund oder Flansch (26) aufweist mit einer parallel zur Bundebene der Bundlagerbuchse erstreckten Anlagefläche, mit der der Lagerbolzen (8) gegen den Bund (12) der Bundlagerbuchse anliegt und diese gegen Herausfallen sichert.

3. Gleitlagerung nach Anspruch 1 oder 2, **dadurch gekennzeichnet, dass** der durch das Axiallagerelement (40) hindurchgreifende Abschnitt (18) des Lagerbolzens (8) nach radial außen deformiert ist und eine Einbördelung des radial inneren Randbereichs (42) des Axiallagerelements (40) bildet.

4. Gleitlagerung nach Anspruch 1, 2 oder 3, **dadurch gekennzeichnet, dass** der Lagerbolzen (8) einen Befestigungsabschnitt (44) an einem Ende aufweist, mit dem er mit einem weiteren Scharniergehäuseteil zur Ausbildung eines Gelenks verbindbar ist.

5. Gleitlagerung nach Anspruch 4, **dadurch gekennzeichnet, dass** der Lagerbolzen (8) mit dem weiteren Scharniergehäuseteil drehfest verbindbar ist.

6. Gleitlagerung nach einem der vorstehenden Ansprüche, **dadurch gekennzeichnet, dass** der zylindrische Buchsenteil (10) durch axiales Stauchen seiner Stirnfläche (34) nach radial außen und nach radial innen gegen die Innenwandung der Lageröffnung (4) und gegen die Umfangsfläche des Lagerbolzens (8) spielfrei deformiert ist, so dass das Losbrechdrehmoment der Gleitlagerung zwischen 1 und 6 Nm liegt.

7. Gleitlagerung nach Anspruch 6, **dadurch gekennzeichnet, dass** das Losbrechdrehmoment der Gleitlagerung zwischen 2 und 5 Nm liegt.

8. Gleitlagerung nach Anspruch 7, **dadurch gekennzeichnet, dass** das Losbrechdrehmoment der Gleitlagerung zwischen 3 und 5 Nm liegt.

9. Gleitlagerung nach Anspruch 6, **dadurch gekennzeichnet, dass** das Drehmoment der Gleitlagerung zwischen 0,5 und 4 Nm liegt.

10. Gleitlagerung nach Anspruch 9, **dadurch gekennzeichnet, dass** das Drehmoment der Gleitlagerung zwischen 0,5 und 2,0 Nm liegt.

11. Gleitlagerung nach einem der vorstehenden Ansprüche, **dadurch gekennzeichnet, dass** das Losbrechdrehmoment der Gleitlagerung stets mehr als 0,5 Nm, vorzugsweise mehr als 1 Nm größer ist als das nach dem Losbrechen sich einstellende Drehmoment.

12. Gleitlagerung nach einem der vorstehenden Ansprüche, **dadurch gekennzeichnet, dass** die Bundlagerbuchse (6) und/oder das Axiallagerelement (40) aus einem Metall/Kunststoff-Verbundwerkstoff gefertigt ist.

13. Gleitlagerung nach einem der vorstehenden Ansprüche, **dadurch gekennzeichnet, dass** bei einem Lagerbolzendurchmesser zwischen 5 und 20 mm der Durchmesser der Lageröffnung zwischen 1 und 4 mm größer ist als der Lagerbolzendurchmesser.

14. Gleitlagerung nach Anspruch 13, **dadurch gekennzeichnet, dass** bei einem Lagerbolzendurchmesser zwischen 5 und 12 mm der Durchmesser der Lageröffnung zwischen 1 und 2,5 mm beträgt.

15. Verfahren zum Herstellen einer Gleitlagerung nach einem oder mehreren der Ansprüche 1 - 14, umfassend ein eine Lageröffnung aufweisendes Scharniergehäuseteil und eine in die Lageröffnung eingepresste Bundlagerbuchse, in die ein Lagerbolzen eingesteckt und darin schwenkbar gelagert ist, mit einem vorbestimmten zum Verdrehen des Bolzens erforderlichen Drehmoment, **dadurch gekennzeichnet, dass** der zylindrische Buchsenteil der in die Lageröffnung eingesteckten Bundlagerbuchse durch axiales Stauchen der Stirnfläche nach radial außen und nach radial innen gegen die Innenwandung der Lageröffnung und gegen die Umfangsfläche des Lagerbolzens deformiert wird und dass dabei in Abhängigkeit von der hierfür gewählten auf die Stirnseite einwirkenden Kraft ein Losbrechdrehmoment der Gleitlagerung zwischen 1 und 6 Nm, vorzugsweise zwischen 2 und 5 Nm erreicht wird und ferner die Stirnfläche (34) des zylindrischen Buchsenteils (10) der Bundlagerbuchse (6) hinter den die Lageröffnung (4) umgebenden Oberflächenbereich (22) des Scharniergehäuseteils (2) zurückgesetzt wird oder höchstens bündig zu diesem verläuft und dass an der dem Bund (12) der Bundlagerbuchse (6) gegenüberliegenden Seite der Gleitlagerung ein ringscheibenförmiges Axiallagerelement (40) so vorgesehen wird, dass es radial außen gegen den die Lageröffnung (4) umgebenden Oberflächenbereich (22) des Scharniergehäuseteils (2) und radial innen gegen eine axiale Stufe (24) des Lagerbolzens (8) anliegt, sodass der Lagerbolzen (8) gegen das Axiallagerelement (40) in axialer Richtung unverlierbar lagegesichert ist.

## Claims

1. Plain bearing that comprises a hinge housing (2) having a transversing bearing opening (4) and a flange bearing bush (6) pressed into said bearing opening (4), in which a bearing pin (8) is inserted and is received so as to be swivelled, wherein the flange bearing shell (6) exhibits a cylindrical bush part (10) and a flange (12) directed radially outwards and wherein the cylindrical bush part (10) of the flange bearing bush (6) inserted in the bearing opening (4) is deformed radially outwards and radially inwards by axially upsetting the front face (34) and rests on the inner wall of the bearing opening (4) and against the circumferential surface of the bearing pin (8) without play and wherein the side of the plain bearing opposite the flange (12) of the flange bearing bush (6) is provided with an axial bearing element (40) in the shape of an annular disk that rests, on the exterior, radially against the surface area (22) of the hinge housing (2) surrounding the bearing opening (4), **characterized in that** the front face (34) of the cylindrical bush part (10) of the flange bearing bush (6) is recessed behind the surface area (22) of the hinge housing (2) surrounding the bearing opening (4) or at most runs flush with this and that the axial bearing element (40) in the shape of an annular disk rests radially inwards against an axial step (20) of the bearing pin (8) and that the bearing pin (8) is safely secured in its position vis-à-vis the axial bearing element (40) in the axial direction.

2. Plain bearing according to claim 1, **characterized in that** the bearing pin (8) exhibits a radially extending collar or flange (26) with a contact face extending parallel to the flange plane of the flange bearing bush, with which the bearing pin (8) rests against the flange (12) of the flange bearing bush and prevents this from falling out.

3. Plain bearing according to claim 1 or 2, **characterized in that** the section (18) of the bearing pin (8) passing through the axial bearing element (40) is deformed radially outwards and crimps the radially inner boundary area (42) of the axial bearing element (40).

4. Plain bearing according to claims 1, 2 or 3, **characterized in that** the bearing pin (8) exhibits a fastening section (44) at one end, with which it can be connected to a further hinge housing for forming a joint.

5. Plain bearing according to claim 4, **characterized in that** the bearing pin (8) can be rigidly connected to the further hinge housing.

6. Plain bearing according to anyone of the preceding claims, **characterized in that** the cylindrical bush part (10) is deformed without play by axially upsetting its front face (34) radially outwards and radially inwards against the inner wall of the bearing opening (4) and against the circumferential surface of the bearing pin (8), so that the initial breakaway torque of the plain bearing is between 1 and 6 Nm.

7. Plain bearing according to claim 6, **characterized in that** the initial breakaway torque of the plain bearing is between 2 and 5 Nm.

8. Plain bearing according to claim 7, **characterized in that** the initial breakaway torque of the plain bearing is between 3 and 5 Nm.

9. Plain bearing according to claim 6, **characterized in that** the torque of the plain bearing is between 0.5 and 4 Nm.

10. Plain bearing according to claim 9, **characterized in that** the torque of the plain bearing is between 0.5 and 2.0 Nm.

11. Plain bearing according to anyone of the preceding claims, **characterized in that** the initial breakaway torque of the plain bearing is always more than 0.5 Nm, preferably more than 1 Nm greater than the torque ensuing after the breakaway.

12. Plain bearing according to anyone of the preceding claims, **characterized in that** the flange bearing bush (6) or the axial bearing element (40) is produced from a metal/plastic composite material.

13. Plain bearing according to anyone of the preceding claims, **characterized in that** with a bearing pin diameter of between 5 and 20 mm the diameter of the bearing opening of between 1 and 4 mm is greater than the bearing pin diameter.

14. Plain bearing according to claim 13, **characterized in that** with a bearing pin diameter of between 5 and 12 mm the diameter of the bearing opening amounts to between 1 and 2.5 mm.

15. Method for manufacturing a plain bearing according to one or several of claims 1-14, that comprises a hinge housing having a bearing opening and a flange bearing bush pressed into the bearing opening, in which a bearing pin is inserted and is received so as to be swivelled, with a pre-set torque necessary for the swivelling of the pin, **characterized in that** the cylindrical bush part of the flange bearing bush inserted in the bearing opening is deformed by axially upsetting the front face radially outwards and radially inwards against the inner wall of the bearing opening and against the circumferential surface of the bearing pin and that as a function of the force, selected for this and acting upon the front face, an initial breakaway torque of the plain bearing between 1 and 6 Nm, preferably between 2 and 5 Nm, is reached and in addition the front face (34) of the cylindrical bush part (10) of the flange bearing bush (6) is recessed behind the surface area (22) of the hinge housing (2) surrounding the bearing opening (4) or at most runs flush with this and that the side of the plain bearing opposite the flange (12) of the flange bearing bush (6) is provided with an axial bearing element (40) in the shape of an annular disk in such a manner that it rests, on the exterior, radially against the surface area (22) of the hinge housing (2) surrounding the bearing opening (4) and, on the interior, radially against an axial step (24) of the bearing pin (8) so that the bearing pin (8) is safely secured in its position vis-à-vis the axial bearing element (40) in the axial direction.

## Revendications

1. Palier de glissement comprenant une partie de logement de charnière (2) pourvue d'un logement de palier traversant (4) et un coussinet à collerette (6) qui est emmanché dans le logement de palier (4) et dans lequel un pivot (8) est inséré et logé pivotant, le coussinet à collerette (6) présentant une partie de coussinet cylindrique (10) et une collerette (12) orientée radialement vers l'extérieur, la partie de coussinet cylindrique (10) du coussinet à collerette (6) emmanché dans le logement de palier (4) étant déformée vers l'extérieur et vers l'intérieur, dans la direction radiale, par refoulement axial de la face frontale (34) et coopérant en appui sans jeu avec la paroi interne du logement de palier (4) et la surface périphérique du pivot (8), et un élément de palier axial (40) en forme de rondelle étant prévu sur la face du palier de glissement opposée à la collerette (12) du coussinet à collerette (6), lequel élément de palier axial repose en appui extérieurement, dans la direction radiale, sur la portion de surface (22) de la partie de logement de charnière (2), qui entoure le logement de palier (4), **caractérisé en ce que** la face frontale (34) de la partie de coussinet cylindrique (10) du coussinet à collerette (6) est en retrait derrière la portion de surface (22) de la partie de logement de charnière (2), qui entoure le logement de palier (4), ou est tout au plus à niveau avec ladite portion de surface, **en ce que** l'élément de palier axial (40) en forme de rondelle coopère en appui intérieurement, dans la direction radiale, avec un gradin axial (20) que présente le pivot (8) et **en ce que** le pivot (8) est monté imperdable dans la direction axiale et bloqué en position par l'élément de palier axial (40).

2. Palier de glissement selon la revendication 1, **caractérisé en ce que** le pivot (8) comporte une collerette ou bride radiale (26) présentant une portée qui s'étend parallèlement au plan de la collerette du coussinet à collerette et par laquelle le pivot (8) appuie contre la collerette (12) du coussinet à collerette, empêchant ce dernier de tomber.

3. Palier de glissement selon la revendication 1 ou la revendication 2, **caractérisé en ce que** la portion (18) du pivot (8), qui traverse l'élément de palier axial (40), est déformée vers l'extérieur, dans la direction radiale, pour venir sertir le bord radialement intérieur (42) de l'élément de palier axial (40).

4. Palier de glissement selon la revendication 1, 2 ou 3, **caractérisé en ce que** le pivot (8) présente à une extrémité une portion de fixation (44), par laquelle il peut être relié à une autre partie de logement de charnière pour former une articulation.

5. Palier de glissement selon la revendication 4, **caractérisé en ce que** le pivot (8) peut être relié fixe en rotation à l'autre partie de logement de charnière.

6. Palier de glissement selon l'une quelconque des revendications précédentes, **caractérisé en ce que** la partie de coussinet cylindrique (10) est déformée par refoulement axial de sa face frontale (34) vers l'extérieur et vers l'intérieur, dans la direction radiale, pour venir appuyer sans jeu contre la paroi interne du logement de palier (4) et contre la face périphérique du pivot (8), de façon que le couple de décollage du palier de glissement soit compris entre 1 et 6 Nm.

7. Palier de glissement selon la revendication 6, **caractérisé en ce que** le couple de décollage du palier de glissement est compris entre 2 et 5 Nm.

8. Palier de glissement selon la revendication 7, **caractérisé en ce que** le couple de décollage du palier de glissement est compris entre 3 et 5 Nm.

9. Palier de glissement selon la revendication 6, **caractérisé en ce que** le couple du palier de glissement est compris entre 0,5 et 4 Nm.

10. Palier de glissement selon la revendication 9, **caractérisé en ce que** le couple du palier de glissement est compris entre 0,5 et 2,0 Nm.

11. Palier de glissement selon l'une quelconque des revendications précédentes, **caractérisé en ce que** le couple de décollage du palier de glissement est toujours supérieur de plus de 0,5 Nm, de préférence de plus de 1 Nm, au couple qui s'établit après décollage.

12. Palier de glissement selon l'une quelconque des revendications précédentes, **caractérisé en ce que** le coussinet à collerette (6) et/ou l'élément de palier axial (40) est/sont fabriqué(s) dans un matériau composite métal/plastique.

13. Palier de glissement selon l'une quelconque des revendications précédentes, **caractérisé en ce que** dans le cas d'un pivot de 5 à 20 mm de diamètre, le diamètre du logement de palier est supérieur de 1 à 4 mm au diamètre du pivot.

14. Palier de glissement selon la revendication 13, **caractérisé en ce que** dans le cas d'un pivot de 5 à 12 mm de diamètre, le diamètre du logement de palier est supérieur de 1 à 2,5 mm au diamètre du pivot.

15. Procédé de fabrication d'un palier de glissement selon l'une ou plusieurs des revendications 1 à 14, comprenant une partie de logement de charnière pourvue d'un logement de palier traversant et un coussinet à collerette qui est emmanché dans le logement de palier et dans lequel un pivot est inséré et logé pivotant, avec un couple préfini pour entraîner en rotation le pivot, **caractérisé en ce que** la partie de coussinet cylindrique du coussinet à collerette emmanché dans le logement de palier est déformée vers l'extérieur et vers l'intérieur, dans la direction radiale, par refoulement axial de la face frontale contre la paroi interne du logement de palier et la surface périphérique du pivot, **en ce qu'**en fonction de la force que l'on a choisi d'appliquer sur la face frontale, on obtient un couple de décollage du palier de glissement compris entre 1 et 6 Nm, de préférence entre 2 et 5 Nm, la face frontale (34) de la partie de coussinet cylindrique (10) du coussinet à collerette (6) étant en retrait derrière la portion de surface (22) de la partie de logement de charnière (2), qui entoure le logement de palier (4), ou étant tout au plus à niveau avec ladite portion de surface, et **en ce qu'**un élément de palier axial (40) en forme de rondelle est prévu sur la face du palier de glissement opposée à la collerette (12) du coussinet à collerette (6) de telle sorte que ledit élément de palier axial repose en appui extérieurement, dans la direction radiale, sur la portion de surface (22) de la partie de logement de charnière (2), qui entoure le logement de palier (4), et intérieurement, dans la direction radiale, contre un gradin axial (24) que présente le pivot (8), de sorte que le pivot (8) est monté imperdable dans la direction axiale et bloqué en position par l'élément de palier axial (40).
